# EUROPÄISCHE PATENTSCHRIFT

(11) **EP 2 863 752 B1**
(45) Veröffentlichungstag und Bekanntmachung des Hinweises auf die Patenterteilung: **16.08.2017**
(21) Anmeldenummer: 13730550.4
(22) Anmeldetag: 19.06.2013
(51) Int. Cl.: A21C 1/02, B01F 7/00, B01F 7/16

(54) **MISCHAPPARAT**
MIXING DEVICE
APPAREIL MÉLANGEUR

(30) Priorität: 21.06.2012 AT 7012012
(43) Veröffentlichungstag der Anmeldung: 29.04.2015
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); BUDAI, Jozsef, A-2100 Korneuburg (AT)
(74) Vertreter: Puchberger & Partner Patentanwälte
(86) Internationale Anmeldenummer: PCT/EP2013/062741
(87) Internationale Veröffentlichungsnummer: WO 2013/189983

(56) Entgegenhaltungen:
- EP-A1- 2 465 352
- WO-A1-03/001954
- WO-A1-2009/030798
- WO-A1-2011/114469
- WO-A1-2011/155385
- DD-A- 93 948
- DE-A1-102010 042 542
- DE-B- 1 017 145
- GB-A- 1 410 383
- US-A- 2 086 858
- US-A- 4 577 975
- US-A1- 2011 262 606

## Beschreibung

Die Erfindung betrifft einen Mischapparat, der einen im oberen Teil des Mischapparates, bevorzugt auf einem Gestell stehend angeordneten, nach oben offenen oder mit einer Abdeckung verschließbaren Mischbehälter aufweist und ein im unteren Teil des Mischapparates angeordnetes einwelliges Rührwerk trägt, das eine vertikal angeordnete Rührwerkswelle aufweist, an der ein im Mischbehälter knapp über dem Behälterboden angeordnetes, als Rotorkörper ausgebildetes Rührwerkzeug befestigt ist, wobei das einwellige Rührwerk als statorloses Rührwerk ausgebildet ist, und der an der Rührwerkswelle befestigte Rotorkörper von einem äußeren Freiraum umgeben ist, der zwischen dem Rotorkörper und der Behälterwand des Mischbehälters angeordnet ist und der äußere Freiraum entlang seines Umfanges zumindest abschnittsweise einen variablen Querschnitt aufweist, und wobei bei dem Mischapparat die Behälterwand zylindrisch ausgeführt ist und die Rührwerkswelle parallel zur und in einem Abstand von der Zylinderachse angeordnet ist.

In solchen Mischapparaten werden große Mengen an formlosen Massen hergestellt, die hauptsächlich aus Wasser und Mehl bestehen, zumeist eine flüssige bis breiige Konsistenz besitzen und aus denen später in einem Backprozess essbare, gebackene Produkte oder nicht für den Verzehr vorgesehene gebackene Produkte hergestellt werden. Solche formlosen Massen sind z. B. die in den Backverfahren der Waffelbacktechnologie eingesetzten flüssigen Backzubereitungen.

Die flüssigen Backzubereitungen bestehen hauptsächlich aus Wasser und einer pulverförmigen Hauptkomponente, zumeist Weizenmehl oder ein Stärkemehl, oder ein anderes Getreidemehl oder eine Mischung aus verschiedenen Getreide- bzw. Stärkemehlen. Die flüssigen Backzubereitungen enthalten auch noch andere pulverförmige bzw. flüssige Zutaten, die jeweils nur einen kleinen Anteil an der Gesamtmenge der jeweiligen Backzubereitung ausmachen und zumeist ihrer jeweiligen Konsistenz entsprechend zusammen mit den flüssigen Anteilen der Backzubereitung bzw. zusammen mit den pulverförmigen Anteilen der Backzubereitung in den Mischbehälter des Mischapparates eingebracht werden.

Die aus den flüssigen Backzubereitungen hergestellten, gebackenen Produkte können essbare Backprodukte sein, wie sie z. B. von den Weichwaffeln, den knusprig-spröden Waffeltüten für Speiseeis oder den knusprig-spröden Waffelblättern der mit Creme gefüllten Waffelschnitten her bekannt sind.

Die aus den flüssigen Backzubereitungen hergestellten, gebackenen Produkte können aber auch andere, an sich nicht für den Verzehr vorgesehene Produkte sein, wie z. B. Verpackungsartikel, wie aus einer stärkehaltigen Backzubereitung hergestellte Verpackungstassen, oder aus einer solchen Backzubereitung hergestellte Teile eines nur einmal zu verwendenden Essgeschirrs wie Messer, Gabeln, Löffeln oder Teller und Tassen.

Bei bekannten Mischapparaten zur Herstellung von flüssigen Backzubereitungen ist ein im oberen Teil des Mischapparates stehend angeordneter, nach oben offener, zylindrischer Mischbehälter vorgesehen, der die Gesamtmenge der herzustellenden Backzubereitung aufnimmt und in den die flüssigen und pulverförmigen Anteile der Backzubereitung von oben eingegeben werden. Im Mischbehälter ist knapp über dem Boden der Stator und der Rotor eines einwelligen Rührwerks angeordnet, das eine zur Behältermittelachse konzentrische Mittelachse besitzt und dessen Rotor von einem unter dem Mischbehälter im unteren Teil des Mischapparates angeordneten Antriebsmotor angetrieben wird. Das Rührwerk sieht einen äußeren, ringförmigen Stator vor, der mit stehend angeordneten Mischflügeln versehen ist und zwischen den Mischflügeln angeordnete Strömungskanäle für das Mischgut besitzt. Der ringförmige Stator ist knapp über dem Boden des Mischbehälters angeordnet und mit dem Boden des Mischbehälters starr verbunden. Das Rührwerk sieht weiters einen im Innenraum des Stators angeordneten Rotor vor, der eine mit der Rotorantriebswelle starr verbundene, kreisförmige Bodenplatte und einen ringförmigen Außenring besitzt, in dem stehend angeordnete Mischflügel und zwischen diesen angeordnete Strömungskanäle für des Mischgut angeordnet sind.

Bei den bekannten Mischapparaten ist der zylindrische Mischbehälter mit seinem Volumen auf die in ihm zu vermischende Charge an Backzubereitung abgestimmt. Für unterschiedlich große Chargen gibt es daher unterschiedlich große Mischapparate.

Wenn man die Mischbehälter der bekannten Mischapparate nur teilweise mit der herzustellenden Backzubereitung füllt, dann wird zwar der überwiegende Teil der Gesamtmasse gut durchmischt, aber es können auch ungenügend durchmischte Massereste in der Mitte des Mischbehälters bzw. an der Behälterwand übrig bleiben, die dann getrennt von der gut durchmischten Hauptmenge der Backzubereitung aus dem Mischbehälter entfernt werden müssen.

Herkömmliche Vorrichtungen sind beispielsweise aus der DD 93 948 A, der WO 03/001954 A1, der WO 2009/030798 A1, der EP 2 465 352 A1, der US 4 577 975 A, der GB 1 410 383 A, der US 2 086 858 A, der US 2011/262606 A1, der WO 2011/114469 A1, der DE 10 17 145 B, der DE 10 2010 042542 A1 und der WO 2011/1553585 A1 bekannt.

Aus der angeführten US 2 086 858 A, die einen Mischapparat entsprechend dem Oberbegriff des Anspruchs 1 offenbart, ist ein Mixer für Flüssigkeiten bekannt, wobei die Rührwerkswelle parallel zur und in einem Abstand von der Zylinderachse angeordnet ist.

Aus der angeführten DE 10 17 145 B ist eine Vorrichtung zum Mischen und/oder Kneten von feinkörnigen, in einer Flüssigkeit verteilten festen Stoffen, bekannt. Der Mischtrog der Vorrichtung ist auf drei Lenkrollen gelagert, wobei er beim Mischen in der Richtung des Mischwerkzeuges mitrotiert.

Eine Aufgabe der vorliegenden Erfindung liegt darin, einen Mischer für den gewerblichen und industriellen Einsatz auf dem Gebiet der Backzubereitungen zu schaffen, der die Nachteile des Standes der Technik überwindet, eine gute Vermischung der Bestandteile der Backzubereitungen erzielt und der resultierenden formlosen Masse die für den nachfolgenden Verarbeitungs- und Backvorgang erforderliche Konsistenz verleiht. Weiters soll der Mischer kostengünstig in der Herstellung und einfach zu warten und reinigen sein. Der Mischer soll auch bei verschiedenen Füllmengen gute Ergebnisse erzielen.

Der erfindungsgemäße Mischapparat ist dadurch gekennzeichnet, dass die Rührwerkswelle in ihrem Abstand zur Zylinderachse des zylindrischen Behälters veränderbar ist. Erfindungsgemäss ist bei dem Mischapparat die Behälterwand zylindrisch ausgeführt und die Rührwerkswelle ist parallel zur und in einem Abstand von der Zylinderachse angeordnet.

Der Durchmesser des Rotorkörpers kann beispielsweise 45 bis 75% des Innendurchmessers des Mischbehälters betragen . Der Abstand zwischen Zylinderachse und Rührwerkswelle liegt bevorzugt im Bereich 2% bis 15%, bevorzugt 2,5% bis 10% des Innendurchmessers des Mischbehälters. Bevorzugt ist der Mischbehälter nach oben von einer Abdeckung abschließbar und sie weist Zufuhreinrichtungen wie Einfüllöffnungen für zu mischende Teigbestandteile und Düsen zum Einspritzen flüssiger Teigbestandteile oder Reinigungsflüssigkeiten auf. Bevorzugt ist die Position der Zufuhreinrichtungen verstellbar. Weiters kann im Behälterboden ein Auslassrohr angeordnet sein, welches durch eine Schließvorrichtung verschließbar oder öffenbar ist. Weiters ist der Behälterboden zum Auslassrohr hin geneigt.

Der Rotorkörper kann verschiedene Konfigurationen haben. Er weist bevorzugt eine mit Durchbrechungen und Stegen ausgebildete Bodenplatte auf, wobei an den Stegen im Wesentlichen radiale Mischflügel angeordnet sind und wobei parallel zur Bodenplatte ein konzentrischer Abschlussring vorgesehen ist, der einen inneren Freiraum des Rotorkörpers begrenzt.

Die Mischflügel können in einem radialen Abstand von der Rührwerkswelle beginnend von einer kleinen Anfangshöhe radial nach außen bis zum Abschlußring ansteigend ausgebildet sein.

Bevorzugt sind die Mischflügel in Drehrichtung des Rotorkörpers gebogen und die Löcher der Bodenplatte erstrecken sich jeweils von dessen Mittelbereich bis nahe an dessen äußeren Rand. In einer Ausführung tragen die Stege jeweils zwei Mischflügel. Weitere Merkmale der Erfindung sind in den Ansprüchen, der Beschreibung und den Figuren enthalten.

Nachfolgend wird die Erfindung anhand mehrerer Ausführungsbeispiele näher beschrieben.
Fig. 1 zeigt schematisch einen Teilschnitt durch eine Ausführung eines nicht erfindungsgemäßen Mischapparates nach Linie I-I in Fig. 3.
Fig. 2 zeigt einen Schnitt nach der Linie II-II in Fig. 3.
Fig. 3 zeigt eine Aufsicht auf den Mischapparat.
Fig. 4 ist eine Schrägansicht auf den Mischapparat bei abgenommener Abdeckung.
Fig. 5 zeigt die Aufsicht auf eine erste Ausbildungsform des Rotorkörpers und Fig. 6 eine Seitenansicht dieses Rotorkörpers.
Fig. 7 bis 9, 10 bis 12, 13 bis 15, 16 bis 18 und 19, 20 zeigen weitere sechs Ausbildungsformen des Rotorkörpers, die ebenfalls vorteilhaft im Mischapparat eingesetzt werden können.
Fig. 21 und 22 zeigen eine bevorzugte alternative Ausführung des Mischapparates im Vertikalschnitt und Aufsicht.
Fig. 23 zeigt eine schematische Aufsicht.

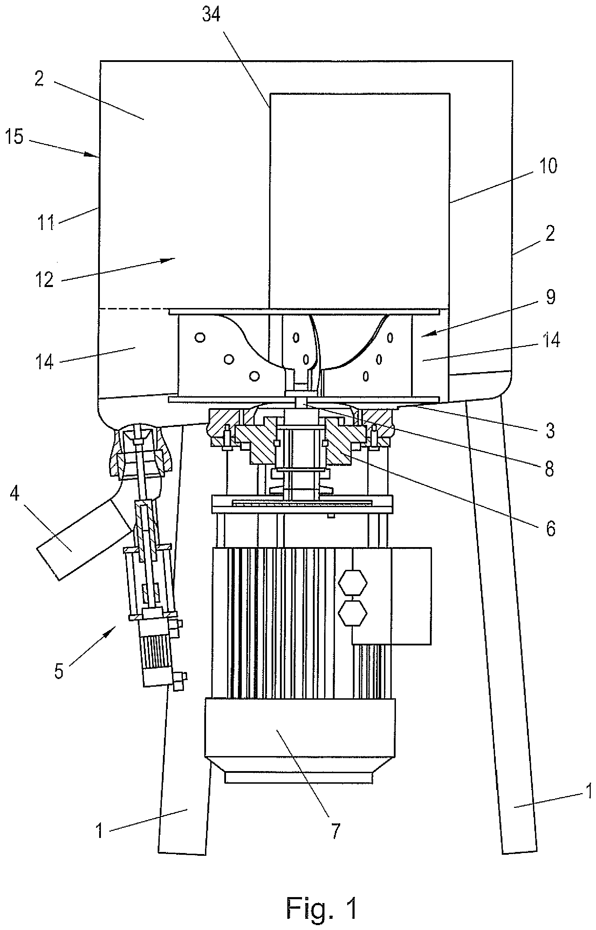

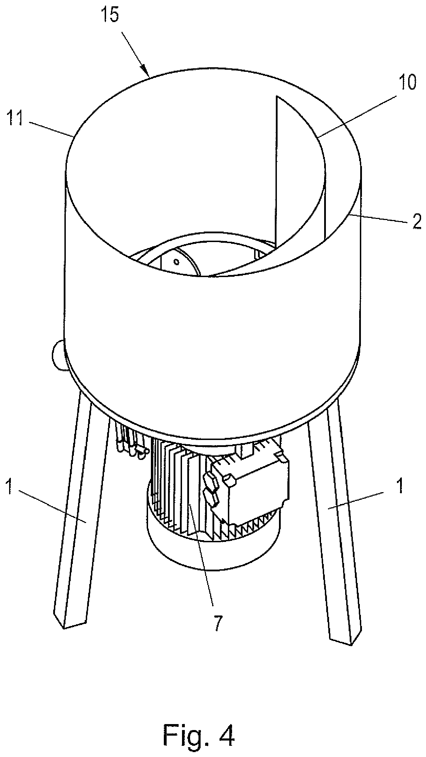

Die Fig. 1 bis 4 zeigen einen Mischapparat in verschiedenen Rissen und Ansichten. Der Mischapparat weist ein am Boden aufstehendes Gestell 1 auf. Das Gestell 1 trägt einen im oberen Teil des Mischapparates stehend angeordneten, nach oben offenen, zylindrischen Behälter 15 mit einer zylindrischen Behälterwand 2. Wie in Fig. 1 ersichtlich, ist der Behälter unten von einem schräg gestellten Behälterboden 3 abgeschlossen, der in Richtung eines Auslassrohres 4 geneigt ist, welches durch eine Schließvorrichtung 5 verschließbar und öffenbar ist. Mittig im Behälterboden 3 sitzt eine Lagerplatte 6, an der nach unten der Rührmotor 7 angeflanscht ist. Der Rührmotor 7 treibt eine vertikal angeordnete Antriebswelle, die als Rührwerkswelle 8 nach oben bis in den Mischbehälter 15 ragt. Am oberen Ende der Rührwerkswelle 8 ist ein Rührwerkzeug in Form eines Rotorkörpers 9 angeordnet.

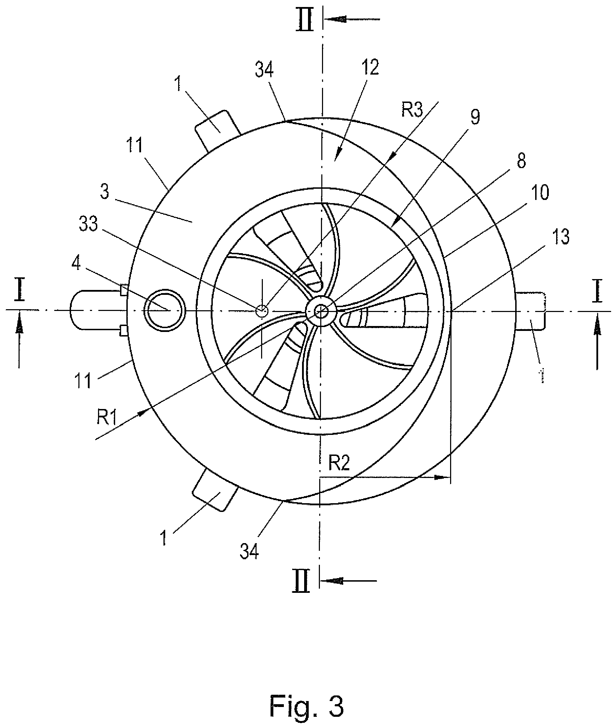

Innerhalb des zylindrischen Behälters 15 mit der zylindrischen Behälterwand 2 ist ein zweiter gebogener Wandabschnitt 10 angeordnet, der sowohl gegenüber der zylindrischen Behälterwand 2 als auch gegenüber dem Behälterboden 3 abgedichtet ist. Somit wird der Mischraum 12 nur zum Teil durch die zylindrische Behälterwand 2 gebildet, da durch den zweiten gebogenen Wandabschnitt 10 der Mischraum 12 asymmetrisch eingeengt wird, wie dies in Fig. 3 gut ersichtlich ist.

Die soeben beschriebene Konstruktion für den Mischbehälter ist aus kostenmäßigen und statischen Gründen vorteilhaft, da der zylindrische Behälter 15 mit der zylindrischen Behälterwand 2 dem Mischapparat eine hohe Festigkeit gibt. Hinsichtlich der Mischerfunktion ist jedoch nur der erste zylindrische Wandabschnitt 11 und der mit ihm verbundene zweite gebogene Wandabschnitt 10 von Bedeutung, die in sich den Mischraum 12 einschließen.

Wie in Fig. 3 ersichtlich ist, sitzt der Rotorkörper 9 mit seiner Rührwerkswelle 8 asymmetrisch im Mischraum 12. Wenn die erste zylindrische Behälterwand einen ersten zylindrischen Wandabschnitt 11 mit einem Radius R1 konzentrisch zur Rührwerkswelle 8 aufweist, dann besitzt der zweite gebogene Wandabschnitt 10 an dessen Scheitel 13 eine radiale Entfernung R2 von der Rührwerkswelle 8, die kleiner R1 ist.

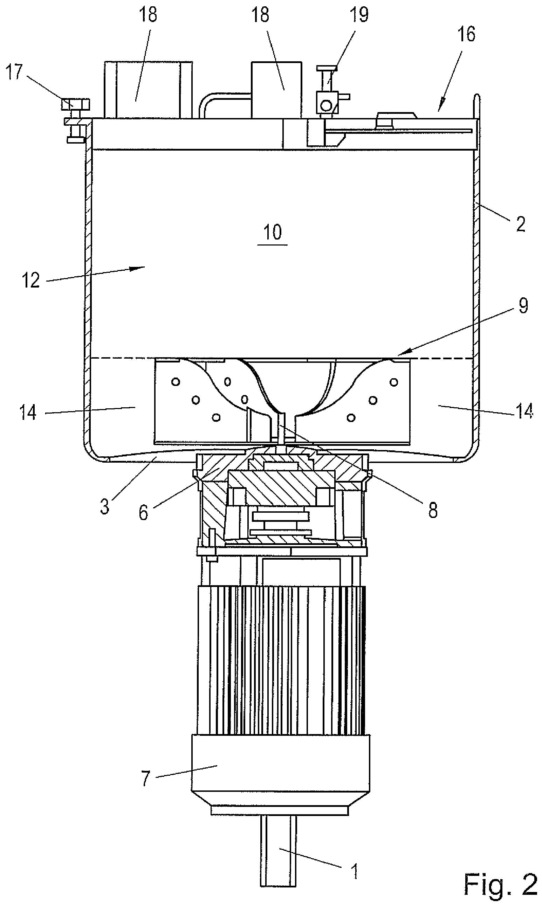

In den Fig. 1 und 2 ist schematisch und strichliert der äußere Freiraum 14 eingezeichnet, der die Höhe des Rotorkörpers 9 besitzt und sich entlang des ersten zylindrischen Wandabschnitts 11 und entlang des zweiten gebogenen Wandabschnitts 10 rund um den Rotorkörper 9 erstreckt. Wie in Fig. 1 deutlich zu sehen ist, ist die Querschnittsfläche des Freiraums 14 gegenüber dem ersten zylindrischen Wandabschnitt wesentlich größer als die Querschnittsfläche gegenüber dem zweiten gebogenen Wandabschnitt 10. Insoweit ist der äußere Freiraum entlang seines Umfanges variabel, da er sich ab den seitlichen Befestigungsstellen 34 des zweiten gebogenen Wandabschnittes 10 bis zum Scheitel 13 kontinuierlich verkleinert und dann wieder vergrößert. Durch diese asymmetrische Anordnung des Rotorkörpers 9 zu den ihn umgebenden Wandabschnitten erfolgt eine überraschend bessere Durchmischung der flüssigen oder teigigen Backmischung als es bei der bekannten Anordnung einer zentralen Rührwerksanordnung der Fall ist.

In Fig. 2 ist der Mischbehälter von einer Abdeckung 16 abgeschlossen, wobei die Abdeckung mittels Verschlussschrauben 17 festgezurrt werden kann. Für das Zuführen der notwendigen zu mischenden Bestandteile der zu rührenden Masse sind Zuführeinrichtungen vorgesehen, nämlich Einfüllöffnungen 18 für pulverförmige oder teigige Bestandteile und Düsen 19 für das Zuführen flüssiger Bestandteile und beispielsweise auch einer Waschlösung. Die Einfüllöffnungen 18 können beispielsweise in der Abdeckung verschiebbar vorgesehen sein, sodass das Einfüllen mehr im Zentrum oder mehr an der Peripherie des Mischbehälters erfolgt.

Wie insbesondere der Fig. 3 entnehmbar ist, ist der erste zylindrische Wandabschnitt 11 konzentrisch zur Rührwerkswelle 8, wohingegen der zweite gebogene Wandabschnitt 10 demgegenüber versetzt ist. Insofern ergibt sich im Mischraum 12 eine asymmetrische Anordnung des Rotorkörpers 9. Zufolge der Verengung des äußeren Freiraums entlang des Umfangs des Rotorkörpers kommt es zu einer guten Durchmischung und die Mischmasse wird mit Druck durch den Rotorkörper hindurch bewegt, sodass sichergestellt ist, dass das gesamte Mischervolumen einer guten Durchmischung unterzogen wird.

Das Verhältnis der Querschnittsverengung des äußeren Freiraumes entlang seines Umfanges hängt von der Anordnung des zweiten gebogenen Wandabschnitts 10 ab. Dieser Wandabschnitt kann durch geeignete Mittel in größerem oder geringerem Abstand von der Peripherie des Rotorkörpers angeordnet werden. Jedenfalls ist am Scheitel 13 des zweiten gebogenen Wandabschnitts der Abstand zum Rotorkörper 9 am geringsten. Der zweite Wandabschnitt weist etwa einen Radius R3 auf, dessen Krümmungsmittelpunkt um etwa 4% bis 30% des Radius R1 gegenüber der Rührwerkswelle 8 verschoben ist.

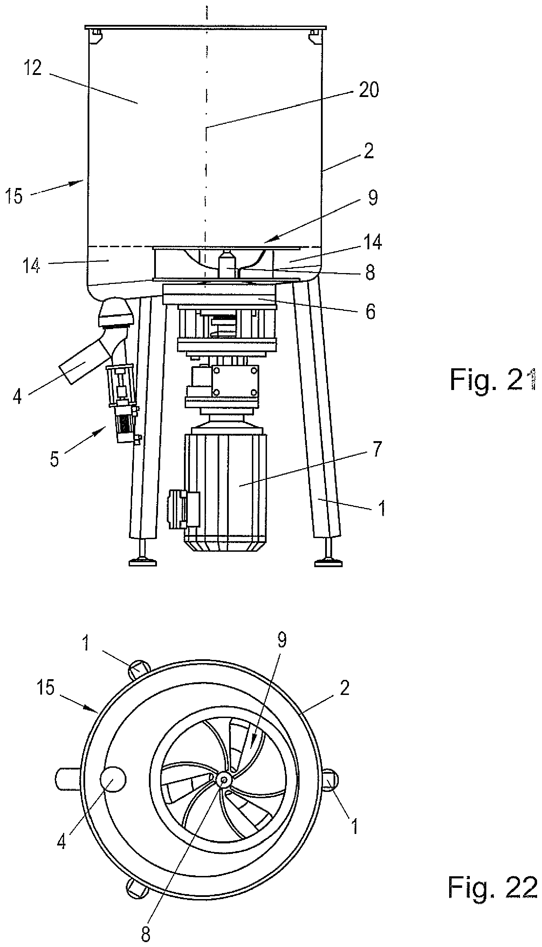

Die Figuren 21 und 22 zeigen eine bevorzugte alternative Ausführungsform der asymmetrischen Anordnung des Rotorkörpers 9. Bei diesem Mischapparat ist der Mischbehälter 15 und auch der Mischraum 12 zylindrisch. Anders als beim bekannten Stand der Technik sitzt jedoch der von der Rührwerkswelle 8 angetriebene Rotorkörper 9 in einem Abstand von der Zylinderachse 20 und etwa parallel dazu. Bevorzugt liegt der Abstand zwischen Zylinderachse und Rührwerkswelle im Bereich von 2% bis 5%, besonders bevorzugt 2,5% bis 10% des Innendurchmessers des Mischbehälters. Beispielsweise kann bei einem Innendurchmesser des Mischbehälters von etwa 700 mm und einem Rotordurchmesser von etwa 450 mm der Abstand zwischen Zylinderachse 20 und Rührwerkswelle 8 etwa 20 mm betragen. Ein bevorzugter Bereich liegt zwischen 20 mm und 70 mm bei den genannten Abmessungen.

Bei dieser Bauart gemäß den Figuren 21, 22 entfällt der zweite gebogene Wandabschnitt innerhalb des zylindrischen Mischbehälters. Im Übrigen ist der Aufbau des Mischers gleich wie oben beschrieben. Insbesondere ist auch dieser Mischbehälter durch eine Abdeckung verschließbar.

Die Arbeitsweise aller dieser Mischapparate kann kontinuierlich oder diskontinuierlich erfolgen.

Auch in Fig. 21 ist schematisch mit strichlierten Linien der äußere Freiraum 14 entlang des Umfanges des Rotorkörpers 9 eingezeichnet und dieser Freiraum ist ebenfalls mit variablem Querschnitt ausgestattet.

Nachfolgend werden einige Beispiele für die eingesetzten Rotorkörper beschrieben.

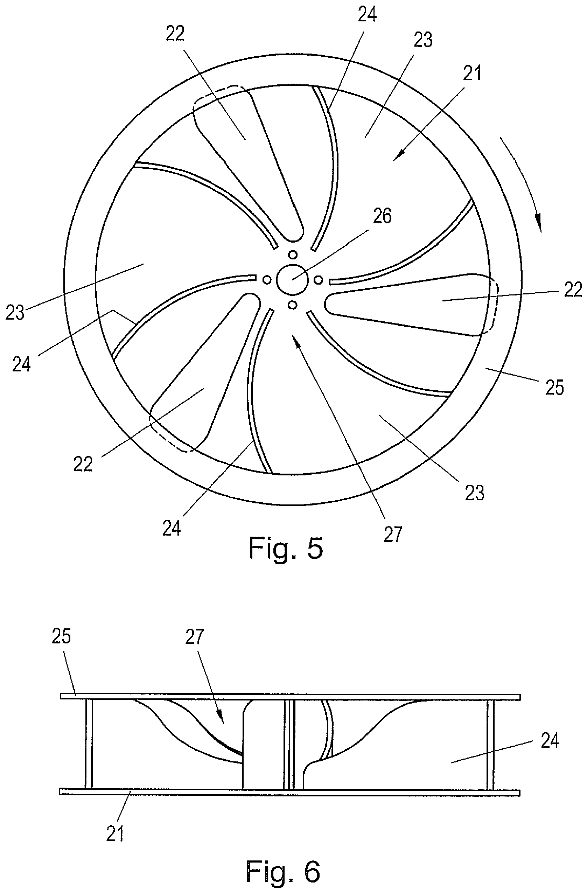

Die Figuren 5 und 6 zeigen in Aufsicht und Seitenansicht jenen Rotorkörper, der in den Mischapparatdarstellungen Fig. 1 bis 4 und Figuren 21, 22 eingebaut ist. Der Rotorkörper weist eine Bodenplatte 21 auf, die mit Löchern oder Durchbrechungen 22 versehen ist. Zwischen den Durchbrechungen 22 sind die Stege 23 vorgesehen. Auf den Stegen 23 sind die im Wesentlichen radialen Mischflügel 24 angeordnet und oben auf den Mischflügeln ist parallel zur Bodenplatte 21 ein konzentrischer Abschlussring 25 vorgesehen. In einem radialen Abstand vom Befestigungsloch 26 für die Rührwerkswelle verlaufen die Mischflügel 24 von einer kleinen Anfangshöhe radial nach außen bis zur Höhe des Abschlussringes aufsteigend. Im vorliegenden Ausführungsbeispiel sind die Mischflügel gegen die Drehrichtung des Rotorkörpers gebogen. Jeder der Stege trägt zwei Mischflügel. Die Durchbrechungen 22 erstrecken sich vom mittleren Bereich nahe dem Loch 26 bis nahe an den äußeren Umfang der Bodenplatte.

Im Inneren des Rotorkörpers ist der innere Freiraum 27 gebildet, durch den das Mischgut leicht in den Rotorkörper eindringen und von diesem wieder in den Mischraum verteilt werden kann. Die Mischmasse wird auch durch die Durchbrechungen 22 nach unten gepresst, sodass ungemischte oder schlecht gemischte Bestandteile unter der Bodenplatte vermieden sind.

Wie schon zuvor beschrieben wurde, bewirkt der außen um den Rotorkörper angeordnete äußere Freiraum zufolge seiner Querschnittsänderungen eine zusätzliche Mischkomponente, wodurch das Mischgut insgesamt gut durchmischt wird.

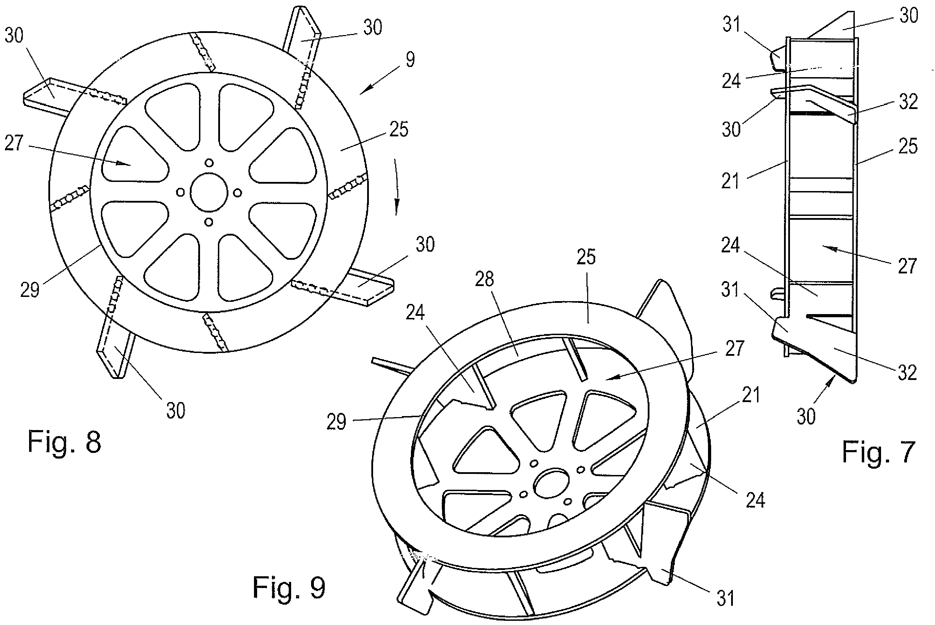

Bei den Figuren 7 bis 9 weist der Rotorkörper 9 ebenfalls eine an der Rührwerkswelle 8 befestigbare Bodenplatte 21 auf. Über der Bodenplatte 21 ist ein über der Rührwerkswelle 8 angeordneter, innerer Freiraum 27 des Rotorkörpers 9 vorgesehen. Rund um den inneren Freiraum 27 herum sind auf der Bodenplatte 21 stehend angeordnete Mischflügel 24 vorgesehen. Zwischen den Mischflügeln 24 sind vom inneren Freiraum 27 nach außen verlaufende Strömungskanäle 28 vorgesehen, die nach oben durch den Abschlussring 25 begrenzt werden, der mit den oberen Rändern der Mischflügel 24 verbunden ist. Der Abschlussring 25 enthält eine mittig angeordnete Ausnehmung 29, die oberhalb des inneren Freiraumes 27 des Rotorkörpers 9 angeordnet ist.

Bei dem in den Figuren 7 bis 9 dargestellten Ausführungsbeispiel des Rotorkörpers 9 besitzt dieser über den äußeren Rand des Abschlussringes 25 nach außen vorstehende zusätzliche Mischflügel 30, die in den zwischen dem Rotorkörper 9 und der zylindrischen Behälterwand des Mischbehälters 15 angeordneten äußeren, ringförmigen Freiraum 14 hinein vorstehen. Die zusätzlichen Mischflügel 30 besitzen einen zur Rotordrehachse parallel verlaufenden unteren Abschnitt 31 und einen schräg zur Rotordrehachse verlaufenden oberen Abschnitt 32. Die zur Rotordrehachse parallel verlaufenden unteren Abschnitte 31 der zusätzlichen Mischflügel 30 stehen über die Bodenplatte 21 des Rotorkörpers 9 nach unten vor.

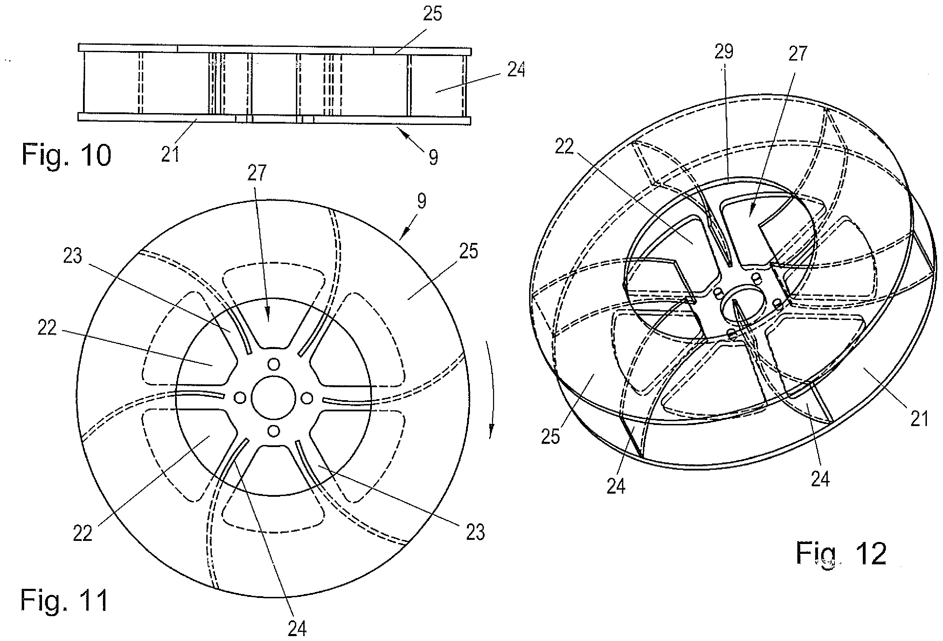

Die Fig. 10 bis 12 zeigen einen Rotorkörper 9, bei dem zwischen der Bodenplatte 21 und dem mit einer mittigen Ausnehmung 29 versehenen Abschlussring 25 stehend angeordnete Mischflügel 24 vorgesehen sind, die mit ihren inneren Endabschnitten in den inneren Freiraum 27 des Rotorkörpers 9 hinein vorstehen. Die Mischflügel 24 stehen auf den in der Bodenplatte 21 ausgebildeten, radial verlaufenden Stegen 23. Diese Stege sind durch in der Bodenplatte 21 angeordnete Löcher bzw. Durchbrechungen 22 von einander getrennt. In der Bodenplatte 21 sind sechs sternförmig angeordnete Stege ausgebildet, auf denen sechs sternförmig angeordnete Mischflügel 24 stehen. Die Mischflügel 24 sind gekrümmt ausgebildet.

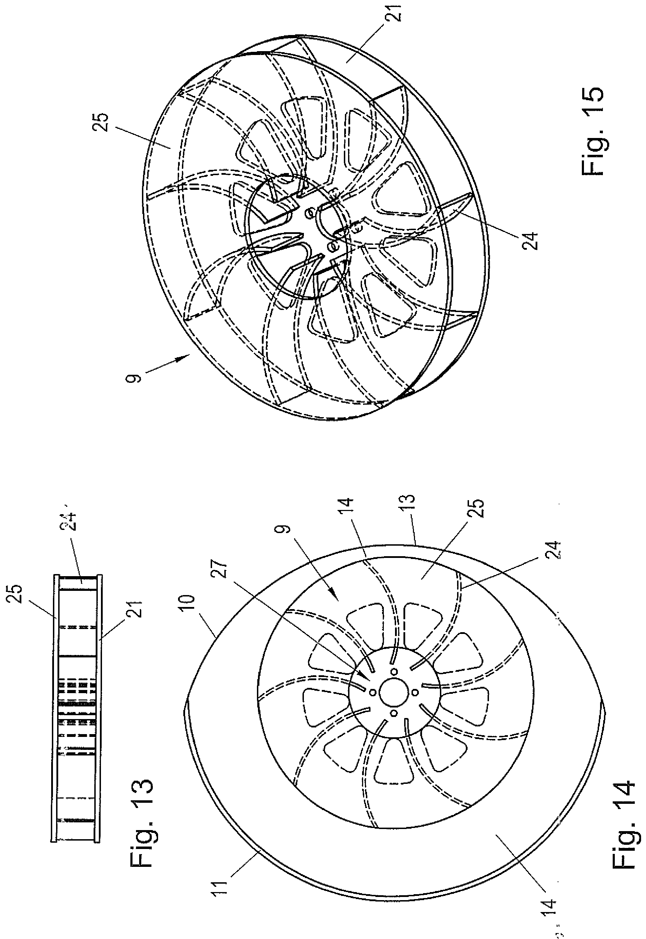

Die Figuren 13 bis 15 zeigen eine weitere Ausführungsform des Rotorkörpers 9. In Fig. 14 ist der Rotorkörper 9 mit dem ihn umgebenden Freiraum 14 dargestellt, der durch den zweiten gebogenen Wandabschnitt 10 zum Scheitel 13 hin verengt geformt ist und sich dann zum zylindrischen Wandabschnitt 11 wieder erweitert. Die sternförmig leicht gebogenen Mischflügel 24 enden außen an der Umfangslinie des Abschlussringes 25 und ragen innen in den inneren Freiraum 27, wobei der Abschlussring 25 relativ großflächig ist und der innere Freiraum klein gehalten ist.

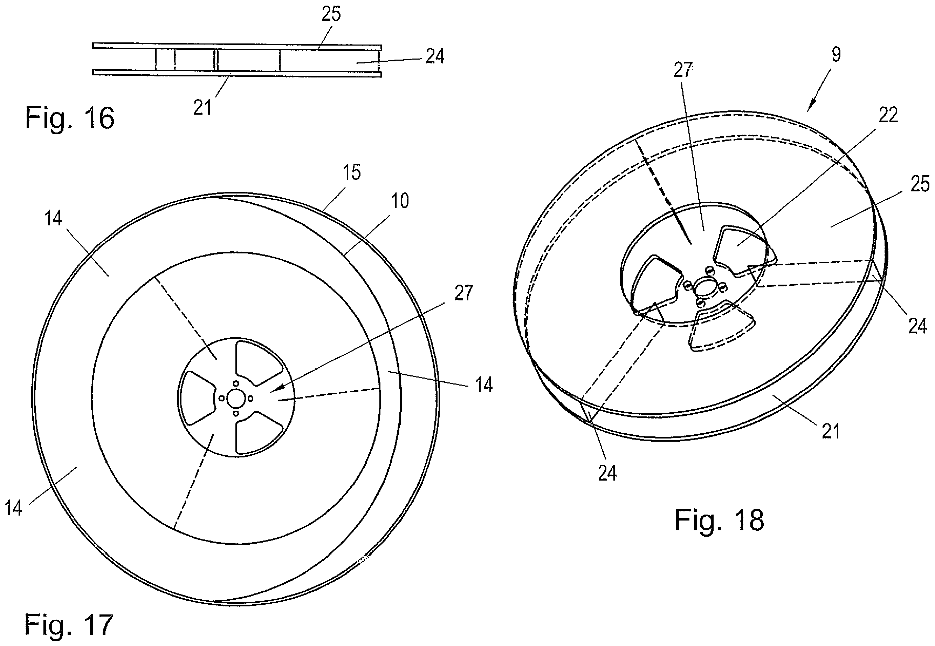

Die Figuren 16 bis 18 zeigen eine weitere Ausführungsform des Rotorkörpers, wobei lediglich drei gerade radial angeordnete Mischflügel 24 und zwischen diesen drei Durchbrechungen 22 angeordnet sind. Auch diese Mischflügel 24 ragen mit ihren inneren Enden über eine kurze Strecke in den inneren Freiraum 27 des Rotorkörpers 9.

In Fig. 17 ist dargestellt, wie dieser Rotorkörper im zylindrischen Mischbehälter 15 angeordnet ist und wie durch den eingesetzten zweiten gebogenen Wandabschnitt 10 der äußere Freiraum 14 rund um den Rotorkörper 9 den sich verjüngenden und dann wieder erweiternden Querschnitt aufweist.

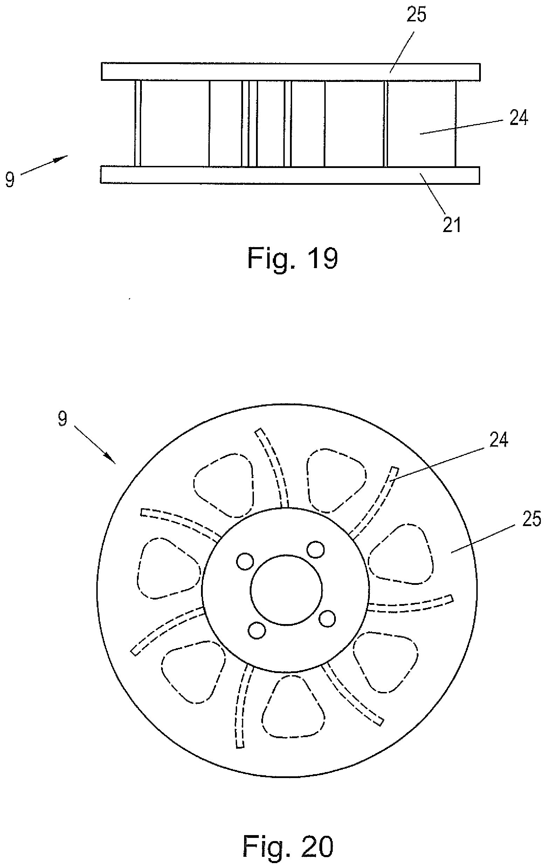

Die Figuren 19 und 20 zeigen Seitenansicht und -aufsicht eines weiteren Rotorkörpers, dessen Konstruktion in Anbetracht der vorherigen Konstruktionsbeschreibungen von selbst verständlich ist. Es handelt sich dabei um einen relativ klein dimensionierten Rotorkörper, wobei die Mischflügel 24 leicht gebogen in radialer Richtung von der äußeren Umfangslinie der Bodenplatte 21 bis zur inneren Umfangslinie des Abschlussringes 25 reichen.

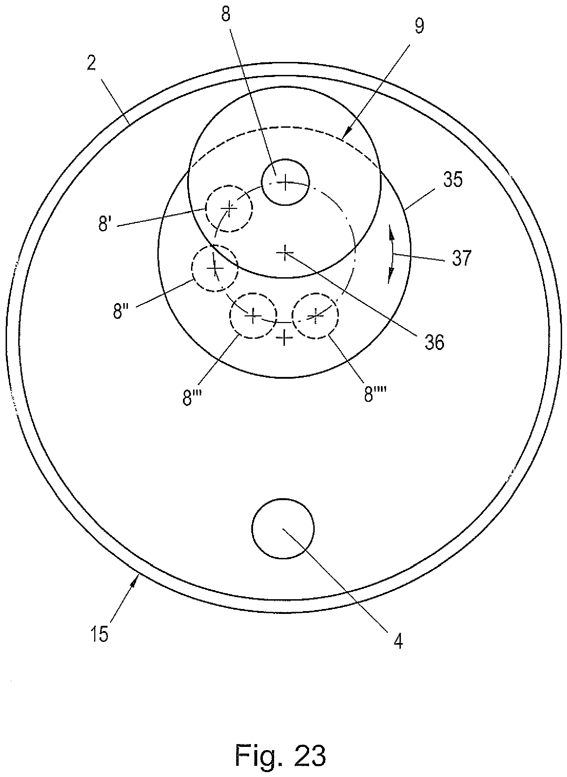

Die Fig. 23 zeigt rein schematisch eine Aufsicht auf den Mischapparat ähnlich der Fig. 22, wobei die Rührwerkswelle in ihrem Abstand zur Zylinderachse 20 des zylindrischen Behälters veränderbar ist. Durch diese Veränderbarkeit des Abstandes ist auch der Abstand zwischen dem äußeren Rand des Rotorkörpers 9 und der Behälterwand 2 und damit das Ausmaß der Verengung des Freiraumes 14 einstellbar.

Damit ist es möglich, das Rührverhalten an die sonstigen Rührparameter wie z.B. an die Drehzahl des Rotorkörpers, an die Teigzusammensetzung und an die Teigmenge anzupassen.

Für diesen Zweck ist im Behälterboden ein kreisrunder Ausschnitt 35 vorgesehen, in den drehbar, aber doch abgedichtet, die Lagerplatte 6 eingesetzt ist. In der Lagerplatte 6 ist von unten die Rührwerkswelle 8 nach oben zum Rotorkörper 9 führend gelagert, wobei die Lagerposition außerhalb der Drehachse 36 der Lagerplatte liegt. Der Rührmotor kann von unten an der Lagerplatte angeflanscht sein.

Die in Fig. 23 mit durchgehender Linie eingezeichnete Stellung der Rührwerkswelle und des zugehörigen Rotorkörpers 9 ist die Stellung mit größter Annäherung an die Behälterwand 2. Die Stellungen 8' bis 8"" für die Rührwerkswelle 8 sind beispielhaft strichliert eingezeichnet und werden durch entsprechendes Verdrehen der Lagerplatte gemäß Pfeil 37 eingestellt.

Der Rotorkörper 9 ist der besseren Übersicht halber nur als Kreis in einer Position und ohne die zugehörigen Mischflügel eingezeichnet.

Die Lagerung der Lagerplatte 6 im Ausschnitt 35 ist vom Fachmann beliebig wählbar. Neben der notwendigen Fertigkeit soll auch die Dichtheit des Behälterbodens und leichte Reinigung beibehalten bleiben. Dies kann beispielsweise durch stufige Ausbildung des Ausschnitts 35 im Behälterboden und Abdichtung mit umlaufendem Dichtungsring erzielt werden.

Die Verstellmöglichkeit der Rührwerkswelle ist in Fig. 23 etwas überhöht dargestellt. In der praktischen Durchführung wird eine Verstellmöglichkeit in der Größenordnung von etwa 10% des Rotorkörperdurchmessers ausreichend sein, wobei dies nicht als Begrenzung der Verstellbarkeit verstanden werden soll.

**Bezugszeichen:**

| | | | |
|---|---|---|---|
| 1. | Gestell | 34. | Seitliche Befestigungsstelle |
| 2. | Zylindrische Behälterwand | 35. | Kreisrunder Ausschnitt |
| 3. | Behälterboden | 36. | Drehachse der Lagerplatte |
| 4. | Auslassrohr | 37. | Pfeil |
| 5. | Schließvorrichtung | R1 | Radius erster zylindrischer Wandabschnitt |
| 6. | Lagerplatte | R2 | Radiale Entfernung |
| 7. | Rührmotor | R3 | Radius des 2. gebogenen Wandabschnittes |
| 8. | Rührwerkswelle | | |
| 9. | Rotorkörper | | |
| 10. | Zweiter gebogener Wandabschnitt | | |
| 11. | Erster zylindrischer Wandabschnitt | | |
| 12. | Mischraum | | |
| 13. | Scheitel | | |
| 14. | Äußerer Freiraum | | |
| 15. | Zylindrischer Behälter | | |
| 16. | abdeckung | | |
| 17. | Verschlussschrauben | | |
| 18. | Einfüllöffnungen | | |
| 19. | Düse | | |
| 20. | Zylinderachse | | |
| 21. | Bodenplatte | | |
| 22. | Durchbrechungen | | |
| 23. | Stege | | |
| 24. | Mischflügel | | |
| 25. | Abschlussring | | |
| 26. | Befestigungsloch | | |
| 27. | Innerer Freiraum | | |
| 28. | Strömungskanäle | | |
| 29. | Mittige Ausnehmung | | |
| 30. | Zusätzliche Mischflügel | | |
| 31. | Unterer Abschnitt | | |
| 32. | Oberer Abschnitt | | |
| 33. | Krümmungsmittelpunkt | | |

## Patentansprüche

1. Mischapparat, der einen im oberen Teil des Mischapparates, bevorzugt auf einem Gestell (1) stehend angeordneten, nach oben offenen oder mit einer Abdeckung (16) verschließbaren Mischbehälter aufweist und ein im unteren Teil des Mischapparates angeordnetes einwelliges Rührwerk trägt, das eine vertikal angeordnete Rührwerkswelle (8) aufweist, an der ein im Mischbehälter knapp über dem Behälterboden (3) angeordnetes, als Rotorkörper (9) ausgebildetes Rührwerkzeug befestigt ist, wobei das einwellige Rührwerk als statorloses Rührwerk ausgebildet ist, und der an der Rührwerkswelle (8) befestigte Rotorkörper (9) von einem äußeren Freiraum (14) umgeben ist, der zwischen dem Rotorkörper (9) und der Behälterwand (2) des Mischbehälters angeordnet ist und der äußere Freiraum (14) entlang seines Umfanges zumindest abschnittsweise einen variablen Querschnitt aufweist, und wobei bei dem Mischapparat die Behälterwand (2) zylindrisch ausgeführt ist und die Rührwerkswelle (8) parallel zur und in einem Abstand von der Zylinderachse (20) angeordnet ist, **dadurch gekennzeichnet, dass** die Rührwerkswelle (8) in ihrem Abstand zur Zylinderachse (20) des zylindrischen Behälters (15) veränderbar ist.

2. Mischapparat nach Anspruch 1, **dadurch gekennzeichnet, dass** die Rührwerkswelle (8) in einer kreisrund ausgebildeten und in einem kreisrunden Ausschnitt (35) des Behälterbodens (3) drehbar gelagerten Lagerplatte (6) gelagert ist, wobei die Lagerung radial versetzt zur Drehachse (36) der Lagerplatte (6) erfolgt.

3. Mischapparat nach einem der Ansprüche 1 oder 2, **dadurch gekennzeichnet, dass** der Durchmesser des Rotorkörpers (9) 45 bis 75% des Innendurchmessers des Mischbehälters beträgt.

4. Mischapparat nach einem der Ansprüche 1 bis 3, **dadurch gekennzeichnet, dass** der Abstand zwischen Zylinderachse (20) und Rührwerkswelle (8) im Bereich 2% bis 15%, bevorzugt 2,5% bis 10% des Innendurchmessers des Mischbehälters beträgt.

5. Mischapparat nach einem der Ansprüche 1 bis 4, **dadurch gekennzeichnet, dass** der Mischbehälter nach oben von der Abdeckung (16) abschließbar ist und dass in der Abdeckung (16) Zufuhreinrichtungen wie Einfüllöffnungen (18) für die zu mischenden Teigbestandteile und Düsen (19) zum Einspritzen flüssiger Teigbestandteile oder Reinigungsflüssigkeiten vorgesehen sind.

6. Mischapparat nach Anspruch 5, **dadurch gekennzeichnet, dass** die Position der Zufuhreinrichtungen (18) verstellbar ist.

7. Mischapparat nach einem der Ansprüche 1 bis 6, **dadurch gekennzeichnet, dass** im Behälterboden (3) ein Auslassrohr (4) angeordnet ist, welches durch eine Schließvorrichtung (5) verschließbar oder öffenbar ist.

8. Mischapparat nach Anspruch 7, **dadurch gekennzeichnet, dass** der Behälterboden (3) zum Auslassrohr (4) hin geneigt ist.

9. Mischapparat nach einem der Ansprüche 1 bis 8, **dadurch gekennzeichnet, dass** der Rotorkörper (9) eine mit Durchbrechungen (22) und Stegen (23) ausgebildete Bodenplatte (21) aufweist, dass an den Stegen (23) im Wesentlichen radiale Mischflügel (24) angeordnet sind und dass parallel zur Bodenplatte (21) ein konzentrischer Abschlussring (25) vorgesehen ist.

10. Mischapparat nach Anspruch 9, **dadurch gekennzeichnet, dass** die Mischflügel (24) in einem radialen Abstand von der Rührwerkswelle (8) beginnend von einer kleinen Anfangshöhe radial nach außen bis zum Abschlussring (25) ansteigend ausgebildet sind.

11. Mischapparat nach Anspruch 9 oder 10, **dadurch gekennzeichnet, dass** die Mischflügel (24) gegen die Drehrichtung des Rotorkörpers (9) gebogen sind.

12. Mischapparat nach einem der Ansprüche 9 bis 11, **dadurch gekennzeichnet, dass** die Durchbrechungen (22) der Bodenplatte (21) sich jeweils von deren Mittelbereich bis nahe an deren äußeren Rand erstrecken.

13. Mischapparat nach einem der Ansprüche 9 bis 12, **dadurch gekennzeichnet, dass** die Stege (23) jeweils zwei Mischflügel (24) tragen.

14. Mischapparat nach einem der Ansprüche 1 bis 13, **dadurch gekennzeichnet, dass** der Rotorkörper (9) mit sternförmig angeordneten Mischflügeln (24) versehen ist.

15. Mischapparat nach einem der Ansprüche 9 bis 14, **dadurch gekennzeichnet, dass** die Mischflügel (24) als gekrümmte Mischflügel ausgebildet sind.

16. Mischapparat nach einem der Ansprüche 9 bis 15, **dadurch gekennzeichnet, dass** die Mischflügel (24) als radial verlaufende Mischflügel ausgebildet sind.

17. Mischapparat nach einem der Ansprüche 14 bis 16, **dadurch gekennzeichnet, dass** beim Rotorkörper (9) die sternförmig angeordneten Mischflügeln (24) mit ihren inneren Endabschnitten in den inneren Freiraum (27) des Rotorkörpers (9) hinein vorstehen.

18. Mischapparat nach einem der Ansprüche 14 bis 17, **dadurch gekennzeichnet, dass** beim Rotorkörper (9) die sternförmig angeordneten Mischflügel (24) mit ihren äußeren Endabschnitten über den äußeren Rand des Abschlussringes (25) nach außen vorstehen und in den zwischen dem Rotorkörper (9) und der zylindrischen Behälterwand des Mischbehälters angeordneten äußeren, ringförmigen Freiraum (14) hinein vorstehen.

19. Mischapparat nach einem der Ansprüche 1 bis 18, **dadurch gekennzeichnet, dass** der Rotorkörper (9) mit über den äußeren Rand des Abschlussringes (25) nach außen vorstehenden, zusätzlichen Mischflügeln (30) versehen ist, die in den zwischen dem Rotorkörper (9) und der zylindrischen Behälterwand des Mischbehälters angeordneten äußeren, ringförmigen Freiraum (14) hinein vorstehen.

20. Mischapparat nach Anspruch 19, **dadurch gekennzeichnet, dass** die zusätzlichen Mischflügel (30) einstückig mit den zwischen der Bodenplatte (21) und dem Abschlussring (25) des Rotorkörpers (9) angeordneten Mischflügeln (24) ausgebildet sind.

21. Mischapparat nach Anspruch 19 oder 20, **dadurch gekennzeichnet, dass** die zusätzlichen Mischflügel (30) einen zur Rotordrehachse parallel verlaufenden, unteren Abschnitt (31) und einen schräg zur Rotordrehachse verlaufenden, oberen Abschnitt (32) besitzen.

22. Mischapparat nach einem der Ansprüche 19 bis 21, **dadurch gekennzeichnet, dass** die zusätzlichen Mischflügel (30) über die Bodenplatte (21) des Rotorkörpers (9) nach unten vorstehen.

23. Mischapparat nach einem der Ansprüche 9 bis 22, **dadurch gekennzeichnet, dass** bei der an der Rührwerkswelle (8) befestigten Bodenplatte (21) des Rotorkörpers (9) in dem an die Rührwerkswelle (8) nach außen anschließenden Bereich zwei oder mehrere von Löchern bzw. Durchbrechungen (22) begrenzte Stege (23) vorgesehen sind.

## Claims

1. A mixing apparatus, comprising a mixing container disposed in an upper part of the mixing apparatus, preferably standing on a frame (1), which mixing container is open towards the top or can be closed with a cover (16) and has a single-shaft agitator disposed in a lower part of the mixing apparatus, which agitator has a vertically disposed agitator shaft (8) to which is fastened an agitating tool configured as a rotor body (9), disposed in said mixing container just above the container base (3), wherein the single-shaft agitator is configured as a statorless agitator and the rotor body (9) fastened to the agitator shaft (8) is surrounded by an external free space (14) disposed between the rotor body (9) and the container wall (2) of the mixing container and the agitator shaft and the external free space (14) has a variable cross-section along its circumference, at least in sections and wherein in the mixing apparatus the container wall (2) is designed to be cylindrical and the agitator shaft (8) is disposed parallel to and at a distance from the cylinder axis (20), **characterized in that** the agitator shaft (8) is variable in its distance from the cylinder axis (20) of the cylindrical container (15).

2. The mixing apparatus according to claim 1, **characterized in that** the agitator shaft (8) is mounted in a circularly configured and rotatably mounted bearing plate (6) in a circular section (35) of the container base (3), wherein the mounting is radially offset to an axis of rotation (36) of the bearing plate (6).

3. The mixing apparatus according to any one of claims 1 or 2, **characterized in that** the diameter of the rotor body (9) is 45 to 75% of the inside diameter of the mixing container.

4. The mixing apparatus according to any one of claims 1 to 3, **characterized in that** the distance between cylinder axis (20) and agitator shaft (8) lies within a range of 2% to 15%, preferably 2.5% to 10% of the inside diameter of the mixing container.

5. The mixing apparatus according to any one of claims 1 to 4, **characterized in that** the mixing container can be closed at the top by a cover (16) and that feed devices such as filling openings (18) for the dough ingredients to be mixed and nozzles (19) for injecting liquid dough ingredients or cleaning liquids are provided in the cover (16).

6. The mixing apparatus according to claim 5, **characterized in that** the position of the feed devices (18) is adjustable.

7. The mixing apparatus according to any one of claims 1 to 6, **characterized in that** an outlet tube (4) is disposed in the container base (3), which outlet tube can be closed or opened by a closing apparatus (5).

8. The mixing apparatus according to claim 7, **characterized in that** the container base (3) is inclined towards the outlet tube (4).

9. The mixing apparatus according to any one of claims 1 to 8, **characterized in that** the rotor body (9) comprises a base plate (21) formed with openings (22) and webs (23), substantially radial mixing vanes (24) are disposed on the webs (23), and a concentric terminating ring (25) is provided parallel to the base plate (21).

10. The mixing apparatus according to claim 9, **characterized in that** the mixing vanes (24) are formed at a radial distance from the agitator shaft (9) beginning from a small initial height and ascending radially outwards towards the terminating ring (25).

11. The mixing apparatus according to claim 9 or 10, **characterized in that** the mixing vanes (24) are curved towards the direction of rotation of the rotor body (9) .

12. The mixing apparatus according to any one of claims 9 to 11, **characterized in that** the openings (22) of the base plate (21) each extend from the central region thereof as far as close to the outer edge thereof.

13. The mixing apparatus according to any one of claims 9 to 12, **characterized in that** the webs (23) each carry two mixing vanes (24).

14. The mixing apparatus according to any one of claims 1 to 13, **characterized in that** the rotor body (9) is provided with mixing vanes (24) arranged in a star shape.

15. The mixing apparatus according to any one of claims 9 14, **characterized in that** the mixing vanes (24) are configured as curved mixing vanes.

16. The mixing apparatus according to any one of claims 9 to 15, **characterized in that** the mixing vanes (24) are configured as radially extending mixing vanes.

17. The mixing apparatus according to any one of claims 14 to 16, **characterized in that** at the rotor body (9) the mixing vanes (24) arranged in a star shape project with inner end sections thereof into the inner free space (27) of the rotor body (9).

18. The mixing apparatus according to any one of claims 14 to 17, **characterized in that** at the rotor body (9) the mixing vanes (24) arranged in a star shape project with outer end sections thereof outwards over the outer edge of the terminating ring (25) and into the external annular free space (14) disposed between the rotor body (9) and the cylindrical container wall of the mixing container.

19. The mixing apparatus according to any one of claims 1 to 18, **characterized in that** the rotor body (9) is provided with additional mixing vanes (30) projecting outwards over the outer edge of the terminating ring (25) which additional mixing vanes project into the external annular free space (14) disposed between the rotor body (9) and the cylindrical container wall of the mixing container.

20. The mixing apparatus according to claim 19, **characterized in that** the additional mixing vanes (30) are formed in one piece with the mixing vanes (24) disposed between the base plate (21) and the terminating ring (25) of the rotor body (9).

21. The mixing apparatus according to claim 19 or 20, **characterized in that** the additional mixing vanes (30) comprise a lower section (31) extending parallel to the axis of rotation of the rotor and an upper section (32) extending obliquely to the axis of rotation of the rotor.

22. The mixing apparatus according to any one of claims 19 to 21, **characterized in that** the additional mixing vanes (30) project downwards over the base plate (21) of the rotor body (9).

23. The mixing apparatus according to any one of claims 9 to 22, **characterized in that** two or more webs (23) delimited by holes or openings (22) are provided in the region adjoining the agitator shaft (8) towards the outside at the base plate (21) of the rotor body (9) fastened to the agitator shaft (8).

## Revendications

1. Mélangeur, qui comporte un réservoir de mélange placé dans la partie supérieure du mélangeur, de préférence debout sur un châssis (1), ouvert vers le dessus ou fermable par un couvercle (16) et qui porte un agitateur à un arbre, placé dans une partie inférieure du mélangeur, qui comporte un arbre d'agitateur (8) placé à la verticale sur lequel est fixé un outil agitateur, placé dans le réservoir de mélange juste au-dessus du fond inférieur (3) du réservoir, conçu en tant que corps de rotor (9), l'agitateur à un arbre étant conçu en tant qu'agitateur sans stator et le corps de rotor (9) fixé sur l'arbre d'agitateur (8) étant entouré par un espace libre (14) extérieur qui est placé entre le corps de rotor (9) et la paroi de réservoir (2) du réservoir de mélange et le long de sa périphérie, l'espace libre (14) extérieur présentant au moins par segments une section transversale variable et près du mélangeur, la paroi de réservoir (2) étant conçue de forme cylindrique et l'arbre d'agitateur (8) étant placé à la parallèle de et avec un écart par rapport à l'axe de cylindre (20), **caractérisé en ce que** l'arbre d'agitateur (8) est modifiable dans son écart par rapport à l'axe de cylindre (20) du réservoir (15) cylindrique.

2. Mélangeur selon la revendication 1, **caractérisé en ce que** l'arbre d'agitateur (8) est logé dans une plaque d'appui (6) conçue sous forme orbiculaire et logée en rotation dans une partie (35) orbiculaire du fond inférieur (3) du réservoir, le logement s'effectuant avec un décalage radial par rapport à l'axe de rotation (36) de la plaque d'appui (6).

3. Mélangeur selon l'une quelconque des revendications 1 ou 2, **caractérisé en ce que** le diamètre du corps de rotor (9) s'élève à de 45 à 75% du diamètre intérieur du réservoir de mélange.

4. Mélangeur selon l'une quelconque des revendications 1 à 3, **caractérisé en ce que** l'écart entre l'axe de cylindre (20) et l'arbre d'agitateur (8) se situe dans l'ordre de 2% à 15%, de préférence de 2,5% à 10% du diamètre intérieur du réservoir de mélange.

5. Mélangeur selon l'une quelconque des revendications 1 à 4, **caractérisé en ce que** le réservoir de mélange est fermable sur le haut par le couvercle (16) et **en ce que** dans le couvercle (16) sont prévus des systèmes d'alimentation, comme des orifices de remplissage (18) pour les ingrédients de pâte à mélanger et des buses (19) destinées à injecter des ingrédients liquides de pâte ou des liquides de nettoyage.

6. Mélangeur selon la revendication 5, **caractérisé en ce que** la position des systèmes d'alimentation (18) est ajustable.

7. Mélangeur selon l'une quelconque des revendications 1 à 6, **caractérisé en ce que** dans le fond inférieur (3) du réservoir est placé un tube de sortie (4), lequel peut se fermer ou s'ouvrir par un dispositif de fermeture (5).

8. Mélangeur selon la revendication 7, **caractérisé en ce que** le fond inférieur (3) du réservoir est incliné en direction du tube de sortie (4).

9. Mélangeur selon l'une quelconque des revendications 1 à 8, **caractérisé en ce que** le corps de rotor (9) comporte une plaque de base (21) conçue avec des ajours (22) et des barrettes (23), **en ce que** sur les barrettes (23) sont placées des pales mélangeuses (24) sensiblement radiales et **en ce qu'**à la parallèle de la plaque de base (21), il est prévu une bague de terminaison (25) concentrique.

10. Mélangeur selon la revendication 9, **caractérisé en ce que** les pales mélangeuses (24) sont conçues avec un écart radial par rapport à l'arbre d'agitateur (8) en commençant par une faible hauteur initiale, croissant en direction radiale vers l'extérieur jusqu'à la bague de terminaison (25).

11. Mélangeur selon la revendication 9 ou 10, **caractérisé en ce que** les pales mélangeuses (24) sont recourbées contre la direction de rotation du corps de rotor (9).

12. Mélangeur selon l'une quelconque des revendications 9 à 11, **caractérisé en ce que** les ajours (22) de la plaque de base (21) s'étendent chacun de la zone centrale de celle-ci jusqu'à proximité de son bord extérieur.

13. Mélangeur selon l'une quelconque des revendications 9 à 12, **caractérisé en ce que** les barrettes (23) portent chacune deux pales mélangeuses (24).

14. Mélangeur selon l'une quelconque des revendications 1 à 13, **caractérisé en ce que** le corps de rotor (9) est doté de pales mélangeuses (24) placées en étoile.

15. Mélangeur selon l'une quelconque des revendications 9 à 14, **caractérisé en ce que** les pales mélangeuses (24) sont conçues sous la forme de pales mélangeuses arquées.

16. Mélangeur selon l'une quelconque des revendications 9 à 15, **caractérisé en ce que** les pales mélangeuses (24) sont conçues en tant que pales mélangeuses s'étendant en direction radiale.

17. Mélangeur selon l'une quelconque des revendications 14 à 16, **caractérisé en ce que** près du corps de rotor (9), les pales mélangeuses (24) placées en étoile débordent par leurs parties extrêmes intérieures dans l'espace libre (27) intérieur du corps de rotor (9).

18. Mélangeur selon l'une quelconque des revendications 14 à 17, **caractérisé en ce que** près du corps de rotor (9) les pales mélangeuses (24) placées en étoile débordent par leurs parties extrêmes extérieures vers l'extérieur, par-dessus le bord extérieur de la bague de terminaison (25) et débordent à l'intérieur de l'espace libre (14) extérieur annulaire placé entre le corps de rotor (9) et la paroi de réservoir cylindrique du réservoir de mélange.

19. Mélangeur selon l'une quelconque des revendications 1 à 18, **caractérisé en ce que** le corps de rotor (9) est doté de pales mélangeuses (30) supplémentaires, débordant vers l'extérieur par-dessus le bord extérieur de la bague de terminaison (25) qui débordent à l'intérieur de l'espace libre (14) extérieur annulaire placé entre le corps de rotor (9) et la paroi de réservoir cylindrique du réservoir de mélange.

20. Mélangeur selon la revendication 19, **caractérisé en ce que** les pales mélangeuses (30) supplémentaires sont conçues en monobloc avec les pales mélangeuses (24) placées entre la plaque de base (21) et la bague de terminaison (25) du corps de rotor (9).

21. Mélangeur selon la revendication 19 ou 20, **caractérisé en ce que** les pales mélangeuses (30)supplémentaires comportent une partie (31) inférieure, s'étendant à la parallèle de l'axe de rotation du rotor et une partie (32) supérieure s'écoulant à la diagonale de l'axe de rotation du rotor.

22. Mélangeur selon l'une quelconque des revendications 19 à 21, **caractérisé en ce que** les pales mélangeuses (30) supplémentaires débordent vers le bas par-dessus la plaque de base (21) du corps de rotor (9).

23. Mélangeur selon l'une quelconque des revendications 9 à 22, **caractérisé en ce que** près de la plaque de base (21) du corps de rotor (9) fixée sur l'arbre d'agitateur (8), dans la zone se raccordant vers l'extérieur sur l'arbre d'agitateur (8) sont prévues deux ou plusieurs barrettes (23) délimitées par des trous ou des ajours (22).
